# EUROPEAN PATENT APPLICATION

(11) **EP 4 606 461 A1**
(43) Date of publication of application: **27.08.2025**
(21) Application number: 23878482.1
(22) Date of filing: 18.01.2023
(51) Int. Cl.: B01D 53/78, B01D 53/62

(54) **CARBON DIOXIDE CAPTURE SYSTEM**

(30) Priority: 21.10.2022 CN 202211293641
(71) Applicant: Huaneng Clean Energy Research Institute, Beijing 102209 (CN)
(72) Inventor: ZHANG, Yuanxue, Beijing 102209 (CN); NIU, Hongwei, Beijing 102209 (CN); LIU, Hanming, Beijing 102209 (CN); LIU, Lianbo, Beijing 102209 (CN); GUO, Dongfang, Beijing 102209 (CN); WANG, Huanjun, Beijing 102209 (CN)
(74) Representative: advotec.
(86) International application number: PCT/CN2023/072895
(87) International publication number: WO 2024/082476

(57) **Abstract**

A carbon dioxide capture system (100), comprising an absorption unit and a regeneration unit, wherein the absorption unit comprises an absorption tower (1), and the absorption tower (1) is internally provided with an absorption zone and multiple layers of scrubbing zone sequentially arranged in the flow direction of flue gas; the regeneration unit comprises a regeneration tower (2) and a regeneration gas condenser (3); the regeneration tower (2) is configured to regenerate an absorbent; a regeneration gas outlet of the regeneration tower (2) is in communication with the regeneration gas condenser (3); and a condensate outlet (31) of the regeneration gas condenser (3) is in communication with an inlet of at least one layer of scrubbing zone, so that the regeneration gas condensate serves as a scrubbing liquid. The absorption tower (1) of the carbon dioxide capture system (100) is provided with multiple layers of scrubbing zone, so that the flue gas passes through the multiple layers of scrubbing zone for scrubbing, which can greatly reduce the loss of the absorbent. The system couples absorption and desorption processes, and the regeneration gas condensate generated during the desorption process serves as the scrubbing liquid, which can effectively avoid the accumulation effect of the absorbent in the scrubbing liquid, fully dissolve the absorbent, and reduce the escape of the absorbent.

## Description

### CROSS-REFERENCE TO RELATED APPLICATION

This application claims priority to Chinese Patent Application No. 202211293641.1, titled "CARBON DIOXIDE CAPTURE SYSTEM", filed with the China National Intellectual Property Administration on October 21, 2022, the entire content of which is incorporated herein by reference.

### FIELD

The present application relates to the technical field of carbon dioxide capture, and more particularly to a carbon dioxide capturing system.

### BACKGROUND

At present, in a basic process for capturing carbon dioxide in a flue gas, a desulfurized flue gas is sprayed and cooled in a pre-washing tower, and then blown into an absorption tower by a booster fan. In the absorption tower, after the carbon dioxide in the flue gas is absorbed by an absorption liquid, a purified tail gas is discharged from the top of the tower. In addition, an upper part of the absorption tower is provided with a circulating water washing system for washing a discharged flue gas, so as to prevent absorption liquid steam from being brought out by the flue gas, resulting in loss of the absorption liquid. In the related art, there is usually only one washing zone in the upper part of the absorption tower. With the continuous circulation of a washing liquid, an absorbent is gradually enriched in the washing zone, resulting in the discharged flue gas still taking away part of the absorbent, affecting the recovery of the absorbent. In large-scale engineering applications, the loss of the absorbent will lead to higher operating costs.

### SUMMARY

The present application aims to solve, at least to a certain extent, one of the technical problems in the related art. Therefore, an embodiment of the present application provides a carbon dioxide capturing system.

The carbon dioxide capturing system provided in the embodiment of the present application includes an absorption unit and a regeneration unit. The absorption unit includes an absorption tower. The absorption tower has a flue gas inlet, a flue gas outlet, a lean liquid inlet and a rich liquid outlet. An absorption zone and multiple washing zones are arranged inside the absorption tower in a flow direction of a flue gas sequentially. The regeneration unit includes a regeneration tower and a regeneration gas condenser. The regeneration tower is in communication with both the rich liquid outlet and the lean liquid inlet, the regeneration tower is configured to regenerate an absorbent, a regeneration gas outlet of the regeneration tower is in communication with the regeneration gas condenser, and a condensate outlet of the regeneration gas condenser is in communication with an inlet of at least one washing zone, so that a regeneration gas condensate serves as a washing liquid.

According to the carbon dioxide capturing system provided in the embodiment of the present application, the absorption tower is provided with the multiple washing zones. The flue gas is washed through the multiple washing zones, so that the loss of the absorbent may be greatly reduced, and an operating cost in a carbon dioxide capturing process may be reduced. In addition, in the present application, absorption and desorption processes are coupled. The regeneration gas condensate during the desorption process serves as the washing liquid and is introduced into the washing zone of the absorption tower. A content of the absorbent in regeneration gas condensate is extremely low, so that using the regeneration gas condensate as the washing liquid is very beneficial to the dissolution of the absorbent, which may effectively avoid an accumulation effect of the absorbent in washing liquid, more fully dissolve the absorbent, and reduce the escape of the absorbent.

In some embodiments, an outlet of the washing zone using the regeneration gas condensate as the washing liquid is in communication with the regeneration tower, so that the regeneration gas condensate is returned to the regeneration tower to regenerate the absorbent.

In some embodiments, the condensate outlet of the regeneration gas condenser is in communication with inlets of several washing zones.

In some embodiments, the condensate outlet of the regeneration gas condenser is in communication with inlets of some of the multiple washing zones. The carbon dioxide capturing system further includes a circulating washing device. The circulating washing device is in communication with inlets and outlets of remaining washing zones, and is configured to circulate a circulating washing liquid in the washing zones.

In some embodiments, two washing zones are provided, including an upper washing zone and a lower washing zone. The condensate outlet of the regeneration gas condenser is in communication with an inlet of the upper washing zone. The circulating washing device is in communication with an inlet and an outlet of the lower washing zone.

In some embodiments, the circulating washing liquid is desalted water.

In some embodiments, the flue gas inlet is located below the absorption zones, the flue gas outlet is located above the washing zones, and the absorption zone and the multiple washing zones are arranged from bottom to top sequentially.

In some embodiments, the rich liquid outlet is located at a bottom of the absorption tower, and the lean liquid inlet is located between the washing zones and the absorption zone in a top-down direction.

In some embodiments, the carbon dioxide capturing system includes a lean and rich liquid heat exchanger. The rich liquid outlet is in communication with a cold end inlet of the lean and rich liquid heat exchanger, a cold end outlet of the lean and rich liquid heat exchanger is in communication with a rich liquid inlet of the regeneration tower, a hot end inlet of the lean and rich liquid heat exchanger is in communication with a lean liquid outlet of the regeneration tower, and a hot end outlet of the lean and rich liquid heat exchanger is in communication with the lean liquid inlet.

In some embodiments, the rich liquid inlet of the regeneration tower is located above the lean liquid outlet, and a rich liquid enters the regeneration tower, and is sprayed from top to bottom.

### BRIEF DESCRIPTION OF THE DRAWINGS

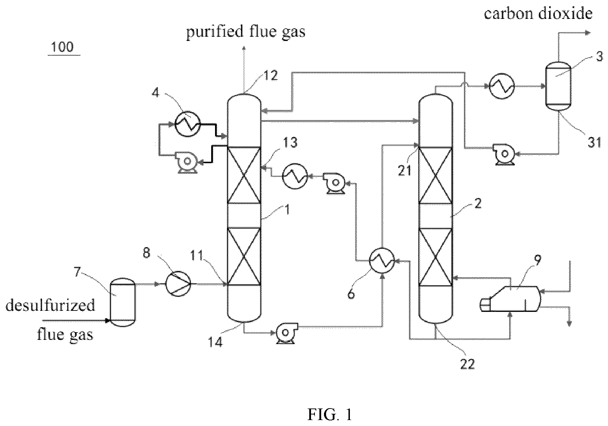

FIG. 1 is a schematic structural diagram of a carbon dioxide capturing system provided in an embodiment of the present application.
Reference numeral: a carbon dioxide capturing system 100, an absorption tower 1, a flue gas inlet 11, a flue gas outlet 12, a lean liquid inlet 13, a rich liquid outlet 14, a regeneration tower 2, a rich liquid inlet 21, a lean liquid outlet 22, a regeneration gas condenser 3, a condensate outlet 31, a circulating washing device 4, a lean and rich liquid heat exchanger 6, a pre-washing tower 7, a booster fan 8, and a reboiler 9.

### DETAILED DESCRIPTION

Embodiments of the present application are described in detail below, examples of which are illustrated in the accompanying drawings. The embodiments described below with reference to the accompanying drawings are illustrative, and are intended to explain the present application and cannot be construed as limiting the present application.

Referring to FIG. 1, a carbon dioxide capturing system 100 provided in an embodiment of the present application is described below. The carbon dioxide capturing system 100 includes an absorption unit and a regeneration unit. The absorption unit includes an absorption tower 1. The absorption tower 1 has a flue gas inlet 11, a flue gas outlet 12, a lean liquid inlet 13 and a rich liquid outlet 14. An absorption zone and multiple washing zones are arranged inside the absorption tower 1 in a flow direction of a flue gas sequentially. The flue gas enters the absorption tower 1 from the flue gas inlet 11 and flows upward into the absorption zone. In the absorption zone, carbon dioxide in the flue gas is captured by an absorbent entering the absorption tower 1 from the lean liquid inlet 13. After the carbon dioxide is captured, a purified flue gas continues to flow upward and sequentially passes through the multiple washing zones. Absorbent steam in the flue gas is washed and dissolved by a washing liquid. Finally, the purified flue gas exits the absorption tower 1 from the flue gas outlet 12.

The regeneration unit includes a regeneration tower 2 and a regeneration gas condenser 3. The regeneration tower 2 is in communication with both the rich liquid outlet 14 and the lean liquid inlet 13 of the absorption tower 1. A rich liquid flowing out of the rich liquid outlet 14 enters the regeneration tower 2. The regeneration tower 2 is configured to desorb and regenerate the rich liquid, so that a concentration of carbon dioxide in a regenerated absorbent is reduced. The rich liquid is regenerated into a lean liquid, and the lean liquid is returned to the absorption tower 1 via the lean liquid inlet 13 for circulating. A regeneration gas is generated in a regeneration process of the regeneration tower 2, and a regeneration gas outlet of the regeneration tower 2 is in communication with the regeneration gas condenser 3. Main components of the regeneration gas are carbon dioxide and water. The water in the regeneration gas is condensed in the regeneration gas condenser 3, and the carbon dioxide is discharged from a carbon dioxide outlet in the regeneration gas condenser 3. A condensate outlet of the regeneration gas condenser 3 is in communication with an inlet of at least one washing zone, so that a regeneration gas condensate (water) serves as the washing liquid in the washing zone, the flue gas passing through the washing zone is washed, and the absorbent steam possibly contained in the flue gas is dissolved, so as to reduce the loss of absorbent.

According to the carbon dioxide capturing system provided in the embodiment of the present application, the absorption tower is provided with the multiple washing zones, and the flue gas is washed through the multiple washing zones, so that the loss of absorbent may be greatly reduced, and the operating cost in a carbon dioxide capturing process may be reduced. In addition, in the present application, absorption and desorption processes are coupled, and the regeneration gas condensate during the desorption process serves as the washing liquid and is introduced into the washing zone of the absorption tower. A content of the absorbent in the regeneration gas condensate is extremely low, so that using the regeneration gas condensate as the washing liquid is very beneficial to the dissolution of absorbent, effectively avoiding an accumulation effect of the absorbent in the washing liquid, more fully dissolving the absorbent and reducing the escape of the absorbent.

In some embodiments, as shown in FIG. 1, an outlet of the washing zone using the regeneration gas condensate as the washing liquid is in communication with the regeneration tower 2, so that the regeneration gas condensate is returned to the regeneration tower 2 to extract and regenerate the absorbent. That is, the washing liquid outlet of the washing zone, which is in communication with a condensate outlet 31 of the regeneration gas condenser 3, is in communication with the regeneration tower 2, so that the washing liquid after completing the washing is returned to the regeneration tower 2. A small amount of absorbent is dissolved in the washing liquid after washing in the washing zone, and enters the regeneration tower for regeneration. Due to the difference in boiling points, water evaporates into vapour and enters the regeneration gas condenser 3 from the regeneration gas outlet of the regeneration tower 2 for condensation, and a condensed regeneration gas condensate returns to the washing zone to continue circulating washing. The absorbent does not reach a boiling point, flows down along the regeneration tower 2, flows into a regenerated lean liquid and enters the absorption tower 1 from the lean liquid inlet 13 for continuous circulation absorption. Thus, the carbon dioxide capturing system 100 realizes the regeneration and circulation of the washing liquid and the absorbent.

In some embodiments, the condensate outlet of the regeneration gas condenser 3 is in communication with inlets of several washing zones. For example, the condensate outlet of the regeneration gas condenser 3 is in communication with an inlet of each of the multiple washing zones, and the regeneration gas condensate is supplied to the washing zone as the washing liquid.

In other embodiments, the condensate outlet 31 of the regeneration gas condenser 3 is in communication with inlets of some of the multiple washing zones, and the others of the multiple washing zones are provided with the washing liquid by other devices. As shown in FIG. 1, the carbon dioxide capturing system 100 further includes a circulating washing device 5. The circulating washing device 5 is in communication with inlets and outlets of remaining washing zones, and is configured to circulate a circulating washing liquid in the washing zones. That is, in these embodiments, the washing liquid in the washing zone in the absorption tower 1 may have different sources. The washing liquid in the washing zone in communication with the condensate outlet 31 of the regeneration gas condenser 3 comes from the regeneration gas condensate in the regeneration gas condenser 3. The washing liquid in the washing zone in communication with the circulating washing device 5 comes from the circulating washing liquid circulating in the circulating washing device 5. Driven by the circulating washing device 5, the circulating washing liquid is circulated into or out of a corresponding washing zone, so as to complete the washing of the absorbent steam in the flue gas. Compared with the technical solution in the related art that only the circulating washing device 5 is used to provide the washing liquid, the carbon dioxide capturing system 100 provided in the embodiments of the present application crosses a boundary between the absorption unit and the regeneration unit, fully utilizes a content gradient of the absorbent, and achieves a better washing effect without additional circulating washing liquid. Optionally, the circulating washing liquid is desalted water.

Further, in some alternative embodiments, a washing zone in communication with the condensate outlet 31 of the regeneration gas condenser 3 may be located downstream of a washing zone in communication with the circulating washing device 5, that is, the former may be located above the latter. In a process of the flue gas circulating in the absorption tower 1 from bottom to top, the flue gas first passes through the washing zone in communication with the circulating washing device 5, and most of the absorbent in the flue gas may be dissolved in the circulating washing liquid. The rest of the flue gas flows upward through the washing of the regeneration gas condensate, and the absorbent is continuously dissolved in the regeneration gas condensate. Therefore, after multiple times of washing, the content of the absorbent in the purified flue gas discharged from the flue gas outlet 12 is greatly reduced.

Of course, in other alternative embodiments, a washing zone in communication with the condensate outlet 31 of the regeneration gas condenser 3 may be located at upstream of a washing zone in communication with the circulating washing device 5, that is, the former may be located below the latter. In a process of the flue gas circulating in the absorption tower 1 from bottom to top, the flue gas may be washed with the regeneration gas condensate first, and then washed with the circulating washing liquid, which may also greatly reduce the content of the absorbent in the purified flue gas discharged from the flue gas outlet 12.

A carbon dioxide capturing system 100 provided in a specific embodiment of the present application is described in detail below with reference to FIG. 1.

As shown in FIG. 1, the carbon dioxide capturing system 100 includes an absorption unit, a regeneration unit, and a circulating washing device 4. The absorption unit includes an absorption tower 1, a pre-washing tower 7, and a booster fan 8, etc. In the absorption tower 1, an absorption zone and multiple washing zones are sequentially arranged from bottom to top. In this embodiment, two washing zones are provided, including an upper washing zone and a lower washing zone. The upper washing zone is located above the lower washing zone, an flue gas inlet 11 of the absorption tower 1 is located below the absorption zone, an flue gas outlet 12 is located above the upper washing zone, a rich liquid outlet 14 is located at a bottom of the absorption tower 1, and a lean liquid inlet 13 is located between the lower washing zone and the absorption zone in a top-down direction.

A desulfurized flue gas first enters the pre-washing tower 7, and is sprayed to cool down while removing moisture and trace gypsum carried by the flue gas. The booster fan 8 enables the flue gas in the pre-washing tower 7 to enter the absorption tower 1 from the flue gas inlet 11. In the absorption tower, the flue gas sequentially passes through the absorption zone from bottom to top, and a regenerated absorbent enters the absorption tower 1 from the lean liquid inlet 13. The flue gas in the absorption zone is sprayed from top to bottom. Carbon dioxide in the flue gas is absorbed by an absorbent, and the absorbent (rich liquid) absorbed with the carbon dioxide flows out of the absorption tower 1 from the rich liquid outlet 14 at the bottom of the absorption tower 1. A treated purified tail gas sequentially passes through the lower washing zone and the upper washing zone and is discharged from a flue gas outlet 12 at the top of the tower. The flue gas is washed through the lower washing zone and the upper washing zone, so as to reduce the loss of an absorbent liquid as absorbent steam is carried out with the flue gas.

The regeneration unit includes a regeneration tower 2, a regeneration gas condenser 3 and a reboiler 9. A rich liquid inlet 21 of the regeneration tower 2 is in communication with the rich liquid outlet 14 of the absorption tower 1, and a lean liquid outlet 22 of the regeneration tower 2 is in communication with the lean liquid inlet 13 of the absorption tower 1. The rich liquid inlet 21 of the regeneration tower 2 is located above the lean liquid outlet 22. A rich liquid enters the regeneration tower 2 from the rich liquid inlet 21 and is sprayed from top to bottom.

Further, the carbon dioxide capturing system 100 includes a lean and rich liquid heat exchanger 6. The lean and rich liquid heat exchanger 6 is arranged between the absorption unit and the regeneration unit, and is configured for heat exchange between a lean liquid and the rich liquid. The rich liquid outlet 14 of the absorption tower 1 is in communication with a cold end inlet of the lean and rich liquid heat exchanger 6. A cold end outlet of the lean and rich liquid heat exchanger 6 is in communication with the rich liquid inlet 21 of the regeneration tower. A hot end inlet of the lean and rich liquid heat exchanger 6 is in communication with the lean liquid outlet 22 of the regeneration tower 2. A hot end outlet of the lean and rich liquid heat exchanger 6 is in communication with the lean liquid inlet 13 of the absorption tower 1.

The rich liquid after absorbing the carbon dioxide is pumped from the rich liquid outlet 14 at the bottom of the absorption tower 1 to a cold side of the lean and rich liquid heat exchanger 6 for heat exchange with the lean liquid at a hot side. After recovering the heat of the lean liquid, the rich liquid enters the rich liquid inlet 21 of the regeneration tower 2 for upper spraying. In the regeneration tower 2, part of the carbon dioxide in the rich liquid is stripped and desorbed, and a semi-lean liquid after stripping and desorption enters the reboiler 9, so that the carbon dioxide therein is further desorbed. The lean liquid after the desorption of the carbon dioxide returns to the regeneration tower 2 again, flows out from the lean liquid outlet 22 at the bottom of the regeneration tower 2, flows through the hot side of the lean and rich liquid heat exchanger 6, and enters the absorption tower 1 for circulating after cooling. A back and forth circulation of the absorbent constitutes a process for continuously absorbing and desorbing carbon dioxide.

A regeneration gas is generated in the regeneration tower 2 during a desorption process, which is mainly composed of carbon dioxide and water. The regeneration gas enters the regeneration gas condenser 3 from the regeneration gas outlet at the top of regeneration tower 2. The bottom of the regeneration gas condenser 3 is provided with a condensate outlet 31, and the top of the regeneration gas condenser 3 is provided with a carbon dioxide outlet. In the regeneration gas condenser 3, condensation is performed, and the regeneration gas condensate flows out from the condensate outlet 31. The condensate outlet 31 of the regeneration gas condenser 3 is in communication with an inlet of the upper washing zone.

As shown in FIG. 5, the circulating washing device 5 is in communication with an inlet and an outlet of the lower washing zone. The circulating washing device 5 circulates a conventional washing liquid (such as desalted water), so that most of the absorbent in the flue gas is dissolved by the lower washing zone. The remaining flue gas passes through the upper washing zone when it is discharged upwards, and is washed by the regeneration gas condensate to continue to dissolve the absorbent, thus reducing the loss of the absorbent. The flue gas after secondary washing may greatly reduce the loss of the absorbent and reduce the operating cost of the carbon dioxide capturing process. It should be noted that, since the regeneration gas condensate contains an extremely trace amount of absorbent, it has a stronger washing strength than a conventional circulating washing liquid, thus ensuring that most or even all of the remaining absorbent in the flue gas washed by the conventional circulating washing liquid is dissolved, which is the key that the embodiments of the present application have an excellent washing effect.

In other alternative embodiments, both the upper washing zone and the lower washing zone may be washed by using the regeneration gas condensate as the washing liquid, and an excellent washing effect may also be achieved.

In some embodiments, the regeneration gas condensate may be used as the washing liquid in the lower washing zone, and the conventional washing liquid may be used as the washing liquid in the upper washing zone. However, after a long period of circulation of the conventional washing liquid, a washing strength of the conventional washing liquid may be gradually weakened due to the fact that more absorbents are dissolved, resulting in that the absorbent in the discharged flue gas may not be completely washed. However, compare with a single conventional washing liquid in the related art, the carbon dioxide capturing system provided in the embodiments of the present application still has an obviously excellent washing effect.

According to the carbon dioxide capturing system 100 provided in the embodiments, a double water washing structure is adopted, so as to reduce the loss of the absorbent. The regeneration gas condensate serves as the upper washing liquid, and almost no absorbent is contained in the condensate, so that the loss of the absorbent may be reduced, and a content gradient of the absorbent is fully utilized, and a better washing effect is achieved without adding additional desalted water.

In the description of the present application, it is to be understood that, the orientation or positional relationship indicated by terms such as "central," "longitudinal," "lateral," "length," "width," "thickness," "upper," "lower," "front," "rear," "left," "right," "vertical," "horizontal," "top," "bottom," "inner," "outer," "clockwise," "counterclockwise," "axial," "radial," and "circumferential" is based on the orientation or positional relationship shown in the accompanying drawings, which is only for the convenience of describing the present application and simplifying the description, and is not intended to indicate or imply that the device or element being referred to must have a particular orientation, be constructed and operated in a particular orientation, so it cannot be construed as a limitation of the present application.

In addition, terms such as "first" and "second" are used for purposes of description and are not intended to indicate or imply relative importance or significance or to imply the number of indicated technical features. Thus, the feature defined with "first" and "second" may explicitly or implicitly include at least one of these features. In the description of the present application, "multiple" means at least two, such as two, three, etc., unless specified otherwise.

In the present application, unless specified or limited otherwise, terms "installation," "interconnection," "connection," and "fixation" are used broadly, and may be, for example, fixed connections, detachable connections, or integral connections; it may be mechanical connections, electrical connections, or communicated with each other; it may be direct connections or indirect connections via an intermediary; it may also be inner communications of two elements or the interaction between two elements, unless specified otherwise. Specific meanings of the above-mentioned terms in the present application may be understood by those skilled in the art according to specific situations.

In the present application, unless specified or limited otherwise, a first feature is "on" or "below" a second feature may be that the first feature is in direct contact with the second feature, or the first feature and the second feature are in indirect contact through an intermediary. Furthermore, a first feature "on," "above," or "on top of" a second feature may be that the first feature is right or obliquely "on," "above," or "on top of" the second feature, or just means that the first feature is at a height higher than that of the second feature. A first feature "below," "under," or "on bottom of" a second feature may be that the first feature is right or obliquely "below," "under," or "on bottom of" the second feature, or just means that the first feature is at a height lower than that of the second feature.

In the present application, terms "an embodiment," "some embodiments," "an example," "a specific example," or "some examples," mean that a particular feature, structure, material, or characteristic described in connection with the embodiment or example is included in at least one embodiment or example of the present application. The schematic expressions of the above-mentioned terms throughout this specification are not necessarily referring to the same embodiment or example. Moreover, the particular features, structures, materials, or characteristics described may be combined in any suitable manner in one or more embodiments or examples. In addition, those skilled in the art may combine the different embodiments or examples and features of different embodiments or examples described in this specification without being mutually inconsistent.

Although the embodiments of the present application have been shown and described above, it is to be understood that the above-mentioned embodiments are illustrative and cannot be construed as limitations of the present application, and changes, modifications, substitutions and variations made to the above-mentioned embodiments by those skilled in the art are within the scope of the present application.

## Claims

1. A carbon dioxide capturing system, comprising:
an absorption unit comprising an absorption tower, wherein the absorption tower has a flue gas inlet, a flue gas outlet, a lean liquid inlet and a rich liquid outlet, and an absorption zone and multiple washing zones are arranged inside the absorption tower in a flow direction of a flue gas sequentially; and
a regeneration unit comprising a regeneration tower and a regeneration gas condenser, wherein the regeneration tower is in communication with both the rich liquid outlet and the lean liquid inlet, the regeneration tower is configured to regenerate an absorbent, a regeneration gas outlet of the regeneration tower is in communication with the regeneration gas condenser, and a condensate outlet of the regeneration gas condenser is in communication with an inlet of at least one washing zone, so that a regeneration gas condensate serves as a washing liquid.

2. The carbon dioxide capturing system of claim 1, wherein an outlet of the washing zone using the regeneration gas condensate as the washing liquid is in communication with the regeneration tower, so that the regeneration gas condensate is returned to the regeneration tower to regenerate the absorbent.

3. The carbon dioxide capturing system of claim 1 or 2, wherein the condensate outlet of the regeneration gas condenser is in communication with inlets of several washing zones.

4. The carbon dioxide capturing system of claim 1 or 2, wherein the condensate outlet of the regeneration gas condenser is in communication with inlets of some of the multiple washing zones, and the carbon dioxide capturing system further comprises a circulating washing device, wherein the circulating washing device is in communication with inlets and outlets of remaining washing zones, and is configured to circulate a circulating washing liquid in the washing zones.

5. The carbon dioxide capturing system of claim 4, wherein two washing zones are provided, comprising an upper washing zone and a lower washing zone, the condensate outlet of the regeneration gas condenser is in communication with an inlet of the upper washing zone, and the circulating washing device is in communication with an inlet and an outlet of the lower washing zone.

6. The carbon dioxide capturing system of claim 4, wherein the circulating washing liquid is desalted water.

7. The carbon dioxide capturing system of claim 1, wherein the flue gas inlet is located below the absorption zones, the flue gas outlet is located above the washing zones, and the absorption zone and the multiple washing zones are arranged from bottom to top sequentially.

8. The carbon dioxide capturing system of claim 7, wherein the rich liquid outlet is located at a bottom of the absorption tower, and the lean liquid inlet is located between the washing zones and the absorption zone in a top-down direction.

9. The carbon dioxide capturing system of claim 1 or 8, comprising a lean and rich liquid heat exchanger, wherein the rich liquid outlet is in communication with a cold end inlet of the lean and rich liquid heat exchanger, a cold end outlet of the lean and rich liquid heat exchanger is in communication with a rich liquid inlet of the regeneration tower, a hot end inlet of the lean and rich liquid heat exchanger is in communication with a lean liquid outlet of the regeneration tower, and a hot end outlet of the lean and rich liquid heat exchanger is in communication with the lean liquid inlet.

10. The carbon dioxide capturing system of claim 9, wherein the rich liquid inlet of the regeneration tower is located above the lean liquid outlet, and a rich liquid enters the regeneration tower, and is sprayed from top to bottom.
